# EUROPEAN PATENT APPLICATION

(11) **EP 4 560 756 A1**
(43) Date of publication of application: **28.05.2025**
(21) Application number: 24190816.9
(22) Date of filing: 25.07.2024
(51) Int. Cl.: H01M 10/052, H01M 10/0525, H01M 10/42, H01M 10/60, H01M 10/653, H01M 10/654, H01M 10/658, H01M 50/593, H01M 50/595

(54) **RECHARGEABLE LITHIUM BATTERY**

(30) Priority: 22.11.2023 KR 20230163558
(71) Applicant: SAMSUNG SDI CO., LTD., Giheung-gu Yongin-si, Gyeonggi-do 17084 (KR)
(72) Inventor: LEE, Tae Jin, 17084 Yongin-si (KR)
(74) Representative: Marks & Clerk LLP

(57) **Abstract**

Disclosed is a rechargeable lithium battery. The rechargeable lithium battery includes an electrode assembly; a battery case housing the electrode assembly; and a heat suppression layer between the electrode assembly and the battery case, wherein the heat suppression layer includes a compound that suppresses heat generation, the compound being selected from FeFs, FeF₂, CuF₂, MoCl₅, NiF₂, FeCl₃, CoFs, CoF₂, MnFs, NbFs, TiF₄, ZnF₂, BiFs, SeO₂, CuO, CuO₂, P₂S₅, P₄S₇, NiS₂, CoS₂, FeS₂, SiS₂, V₂O₅, S₈, or a combination thereof.

## Description

### BACKGROUND

### 1. Field

Embodiments of the present disclosure relate to a rechargeable lithium battery.

### 2. Description of the Related Art

Recently, the rapid advancement of electronic devices such as mobile phones, laptop computers, and electric vehicles using batteries has resulted in surprising increases in use for rechargeable batteries having relatively high capacity and lighter weight.

Such a rechargeable lithium battery includes a positive electrode including a positive active material, a negative electrode including a negative active material, a separator between the positive electrode and the negative electrode, and an electrolyte.

Recently, the use of batteries which are capable of fast charging and having excellent safety which do not cause problems such as explosions and fires has been increasing.

These developments make it useful to progress research for improving fast charging and safety, while satisfying physical properties such as capacity of the battery.

### SUMMARY

One or more embodiments of the present disclosure provide a rechargeable lithium battery that exhibits excellent safety.

One or more embodiments provide a rechargeable lithium battery including an electrode assembly; a battery case housing the electrode assembly; a heat suppression layer between the electrode assembly and the battery case, wherein the heat suppression layer includes a compound that suppresses heat generation, the compound being selected from FeF₃, FeF₂, CuF₂, MoCl₅, NiF₂, FeCl₃, CoF₃, CoF₂, MnF₃, NbF₃, TiF₄, ZnF₂, BiF₃, SeO₂, CuO, CuO₂, P₂S₅, P₄S₇, NiS₂, CoS₂, FeS₂, SiS₂, V₂O₅, S₈, or a combination thereof.

An embodiment provides a rechargeable lithium battery including an electrode assembly; a battery case housing the electrode assembly; a heat suppression layer between the electrode assembly and the battery case, wherein the heat suppression layer includes a compound that suppresses heat generation, the compound being selected from TiO₂, Fe₂O₃, MnO₂, Co₃O₄, MoOs, or a combination thereof, and a thickness of the heat suppression layer is about 25% to about 100% based on a thickness of the battery case (e.g., a thickness of a wall of the battery case).

An embodiment provides a rechargeable lithium battery including an electrode assembly; a battery case housing the electrode assembly; a heat suppression layer between the electrode assembly and the battery case, wherein the heat suppression layer includes a first compound that suppresses heat generation, the first compound being selected from TiO₂, Fe₂O₃, MnO₂, Co₃O₄, MoO₃, or a combination thereof, and a second compound that suppresses heat generation, the second compound being selected from FeFs, FeF₂, CuF₂, MoCl₅, NiF₂, FeCl₃, CoF₃, CoF₂, MnFs, NbFs, TiF₄, ZnF₂, BiFs, SeO₂, CuO, CuO₂, P₂S₅, P₄S₇, NiS₂, CoS₂, FeS₂, SiS₂, V₂O₅, Sa, or a combination thereof.

At least some of the above and other features of the invention are set out in the claims.

Other embodiments are included in the following detailed description.

A rechargeable lithium battery according to one or more embodiments may exhibit excellent safety.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIGS. 1A-1B are schematic perspective views showing a rechargeable lithium battery including an insulation tape and a heat suppression layer according to one or more embodiments.
FIG. 2 is a schematic partially exploded perspective view illustrating a rechargeable lithium battery according to one or more embodiments.
FIG. 3 is a schematic cross-sectional view illustrating a rechargeable lithium battery according to an embodiment.
FIG. 4 is a schematic perspective view illustrating a rechargeable lithium battery according to an embodiment.
FIG. 5 is a schematic perspective view illustrating a rechargeable lithium battery according to an embodiment.

### DETAILED DESCRIPTION

Hereinafter, embodiments are described in more detail. However, these embodiments are examples, the present disclosure is not limited thereto and the scope of the present disclosure is defined by the scope of the appended claims, and equivalents thereof.

Terms used in the specification are used to explain example embodiments, but are not intended to limit the present disclosure. Expressions in the singular include expressions in plural unless the context clearly dictates otherwise.

The term "combination thereof may include a mixture, a laminate, a complex, a copolymer, an alloy, a blend, and/or a reaction product of constituents (e.g., reactants).

The terms "comprise", "include" or "have" are intended to designate that the performed characteristics, numbers, steps, constituted elements, or a combination thereof is present, but it should be understood that the possibility of presence or addition of one or more other characteristics, numbers, steps, constituted elements, or a combination are not to be precluded in advance.

The terms "about" and "substantially" used throughout the present specification refer to the meaning of the mentioned with inherent preparation and material permissible errors if present, and are used in the sense of being close to or near the recited value. These terms are used to help understand the subject matter of the present disclosure and to prevent the disclosure from being limited to strictly accurate or absolute values.

Herein, "or" is not to be construed as an exclusive meaning, for example, "A or B" is construed to include A, B, A+B, and the like.

As used herein, if a definition is not otherwise provided, a particle diameter or size may be an average particle diameter. Such a particle diameter indicates an average particle diameter or size (D50) where a cumulative volume is about 50 volume% in a particle size distribution. The average particle size (D50) may be measured by any suitable method generally used in the art. The average particle size (D50) may be measured, for example, by a particle size analyzer, and/or by a transmission electron microscopic image, and/or a scanning electron microscopic image. In some embodiments, a dynamic light-scattering measurement device may be used to perform a data analysis, and the number of particles is counted for each particle size range, and from this, the average particle diameter (D50) value may be easily obtained through a calculation. In embodiments, the average particle diameter (D50) may be measured by a laser diffraction method. The laser diffraction may be performed by distributing particles to be measured in a distribution solvent and introducing it to a commercially available laser diffraction particle measuring device (e.g., MT 3000 available from Microtrac, Inc.), irradiating ultrasonic waves of about 28 kHz at a power of 60 W, and calculating an average particle diameter (D50) in the 50% standard of particle distribution in the measuring device.

One or more embodiments provide a rechargeable lithium battery including an electrode assembly; a battery case housing the electrode assembly; and a heat suppression layer between the electrode assembly and the battery case.

The heat suppression layer includes a compound that suppresses (e.g., reduces) heat generation, and may further include a binder. The binder may include polyvinylidene fluoride, polyvinyl alcohol, carboxymethyl cellulose, hydroxypropyl cellulose, diacetyl cellulose, polyvinyl chloride, carboxylated polyvinylchloride, polyvinyl fluoride, polyethylene oxide, polyvinylpyrrolidone, polyurethane, polytetrafluoroethylene, polyethylene, polypropylene, a styrene-butadiene rubber, an acrylated styrene-butadiene rubber, an epoxy resin, nylon, or a combination thereof.

If the heat suppression layer further includes the binder, a mixing ratio of the compound that suppresses heat generation and the binder may be about 99:1 to about 1:99 by weight ratio, about 99:1 to about 5:95, or about 95:5 to about 5:95 by weight ratio. If the mixing ratio of the compound that suppresses heat generation and the binder satisfies the above ranges, the effects for controlling battery thermal runaway may be largely obtained.

In some embodiments, the rechargeable lithium battery may be a pouch battery, a can battery, or a combination thereof. If the rechargeable lithium battery according to some embodiments is the can battery, the heat suppression layer may be prepared to be thicker, thereby further enhancing the effects of the compound that suppresses heat generation.

In some embodiments, the can battery may refer to a battery of which the battery case is a can-type, and may be a cylindrical battery or a prismatic battery.

In one or more embodiments, the rechargeable lithium battery may further include an insulation tape (e.g., an electrical insulation tape) between the electrode assembly and the battery case. For example, the insulation tape may surround the electrode assembly. In one or more embodiments, the heat suppression layer may be between the insulation tape and the battery case, or may be between the insulation tape and the electrode assembly. The heat suppression layer may be coated on the insulation tape to be between the insulation tape and the battery case, to be between the electrode assembly and the insulation tape, or may be coated on the battery case to be between the insulation tape and the battery case.

A rechargeable lithium battery according to one or more embodiments may further include a finishing tape which surrounds the electrode assembly to fix the electrode assembly in order to prevent or reduce loosening of the electrode assembly during the insertion of the electrode assembly into the battery case, and the heat suppression layer may be coated on the finishing tape to be included in the battery. If the rechargeable lithium battery includes both the insulation tape and the finishing tape, the finishing tape may contact the battery case, the heat suppression layer may be between the insulation tape and the finishing tape, or may be between the finishing tape and the battery case, or the heat suppression layer may be between the electrode assembly and the insulation tape.

### First embodiment

The heat suppression layer includes a compound that suppresses heat generation, the compound being selected from FeF₃, FeF₂, CuF₂, MoCl₅, NiF₂, FeCl₃, CoF₃, CoF₂, MnF₃, NbF₃, TiF₄, ZnF₂, BiF₃, SeO₂, CuO, CuO₂, P₂S₅, P₄S₇, NiS₂, CoS₂, FeS₂, SiS₂, V₂O₅, Sa, or a combination thereof. The compound that suppresses heat generation may include FeF₃.

In one or more embodiments, the heat suppression layer enhances safety by preventing or reducing occurrences such as battery explosion and/or fire, and/or the like, if the battery is pierced by a sharp object such as a nail, and/or subjected to a physical impact such as a penetration. This may provide the rechargeable lithium battery with improved battery safety.

In one or more embodiments, the thickness of the heat suppression layer may be about 2 µm to about 600 µm, about 10 µm to about 600 µm, about 100 µm to about 500 µm, or about 200 µm to about 300 µm. If the thickness of the heat suppression layer is within the above ranges, the battery safety may be further enhanced.

In one or more embodiments, an amount of the compound that suppresses heat generation may be, based on 100 wt% of the heat suppression layer, about 1 wt% to about 99 wt%, or about 5 wt% to about 95 wt%. If the amount of the compound that suppresses heat generation is within the above ranges, the safety evaluation, such as a heat spread between the battery in a module, penetration of the battery itself, collision, drop, heat exposure, and/or the like, may be improved.

### Second embodiment

The heat suppression layer includes a compound that suppresses heat generation, the compound being selected from TiO₂, Fe₂O₃, MnO₂, Co₃O₄, MoO₃, or a combination thereof, and a thickness of the heat suppression layer is about 25% to about 100% based on a thickness of the battery case (e.g., based on a thickness of a wall of the battery case). The thickness of the heat suppression layer may be, based on the thickness of the battery case, about 30% to about 90%, or about 40% to about 60%.

Inclusion of the heat suppression layer including TiO₂, Fe₂O₃, MnO₂, Co₃O₄, MoOs, or a combination thereof, as the compound that suppresses heat generation, at a thickness of about 25% to about 100% based on the thickness of the battery case (e.g., based on a thickness of a wall of the battery case), may greatly enhance the suppression or reduction of battery temperature rise in safety compromising situations such as penetration of the battery.

In one or more embodiments, the compound that suppresses heat generation may be TiO₂.

In one or more embodiments, the thickness of the heat suppression layer may be about 150 µm to about 600 µm, about 150 µm to about 500 µm, or about 150 µm to about 400 µm. While the thickness of the heat suppression layer satisfies a ratio of about 25% to about 100% based on the thickness of the battery case (e.g., based on a thickness of a wall of the battery case), if the thickness is in the above ranges, the effect of suppressing or reducing an increase in the battery temperature may be largely achieved in safety compromising situations such as penetration.

In one or more embodiments, an amount of the compound that suppresses heat generation may be, based on 100 wt% of the heat suppression layer, about 1 wt% to about 99 wt%, or about 5 wt% to about 95 wt%. If the amount of the compound that suppresses heat generation is within the above ranges, the battery safety may be further enhanced.

### Third embodiment

The heat suppression layer includes a first compound that suppresses heat generation, the first compound being selected from TiO₂, Fe₂O₃, MnO₂, Co₃O₄, MoO₃, or a combination thereof, and a second compound that suppresses heat generation, the second compound being selected from FeF₃, FeF₂, CuF₂, MoCl₅, NiF₂, FeCl₃, CoF₃, CoF₂, MnF₃, NbF₃, TiF₄, ZnF₂, BiF₃, SeO₂, CuO, CuO₂, P₂S₅, P₄S₇, NiS₂, CoS₂, FeS₂, SiS₂, V₂O₅, Sa, or a combination thereof.

In one or more embodiments, the first compound that suppresses heat generation may be TiO₂, and the second compound that suppresses heat generation may be FeF₃.

If the first compound that suppresses heat generation and the second compound that suppresses heat generation are mixed together and used, as the compound that suppresses heat generation, the increase in the maximum exothermic temperature may be more effectively inhibited or reduced during battery penetration.

In some embodiments, a mixing ratio of the first compound that suppresses heat generation and the second compound that suppresses heat generation may be about 5:95 to about 95:5 by weight ratio, about 20:80 to about 80:20 by weight ratio, or about 40:60 to about 60:40 by weight ratio. If the mixing ratio of the first compound that suppresses heat generation and the second compound that suppresses heat generation is within the above ranges, the effect of inhibiting or reducing the increase in the maximum exothermic temperature may be additionally obtained.

An amount of the first compound that suppresses heat generation may be, based on 100 wt% of the heat suppression layer, about 0.4 wt% to about 94.5 wt%, about 1 wt% to about 90 wt%, or about 2.5 wt% to about 90 wt%.

An amount of the second compound that suppresses heat generation may be, based on 100 wt% of the heat suppression layer, about 0.4 wt% to about 94.5 wt%, about 1 wt% to about 90 wt%, or about 2.5 wt% to about 90 wt%.

While the mixing ratio of the first compound that suppresses heat generation and the second compound that suppresses heat generation satisfies the above ranges, if each amount of the first compound that suppresses heat generation and the second compound that suppresses heat generation is within the above ranges, the effect of inhibiting or reducing the increase in the maximum exothermic temperature may be further improved.

A thickness of the heat suppression layer may be about 2 µm to about 600 µm, about 10 µm to about 600 µm, about 100 µm to about 500 µm, or about 200 µm to about 300 µm. If the thickness of the heat suppression layer is within the above ranges, the battery safety may be further improved.

### Method of preparing heat suppression layer

In one or more embodiments, the heat suppression layer may be coated on the electrode assembly to be included in the battery, and/or it may be coated on the battery case to be included in the battery, regardless of the first embodiment, the second embodiment, or the third embodiment. In some embodiments, it may be coated on the insulation tape and/or the finishing tape and may be included in the battery.

For example, the heat suppression layer may be formed by any suitable procedure, as long as it may be provided between the electrode assembly and the battery case. Hereinafter, a representative example procedure of the heat suppression layer formation will be briefly illustrated, but the present disclosure is not limited thereto.

A compound that suppresses heat generation and a binder are mixed together in a solvent to prepare a heat suppression layer composition. The binder may be polyvinylidene fluoride, a polyvinylidene fluoride-hexafluoropropylene copolymer, or a combination thereof. The solvent may be an organic solvent such as N-methyl pyrrolidone, and/or the like. A mixing ratio of the compound that suppresses heat generation and the binder may be a weight ratio of about 99:1 to about 1:99, a weight ratio of about 99:1 to about 5:95, or a weight ratio of about 95:5 to about 5:95. If the mixing ratio of the compound that suppresses heat generation and the binder is within the above ranges, the effects of controlling or reducing increases in the battery temperature may be realized to improve shortcomings related to safety, such as penetration.

The heat suppression layer composition may be coated on a coating target and dried to prepare a heat suppression layer.

The drying may be carried out at about 60 °C to about 140 °C, or about 80 °C to about 120 °C.

A method of preparing the heat suppression layer may include adding the binder to the solvent to prepare a binder liquid, adding the compound that suppresses heat generation to the binder liquid to prepare the liquid of the compound that suppresses heat generation (e.g., a heat suppression layer composition), coating the liquid of the compound that suppresses heat generation on a coating target and drying. The binder and the solvent may be as described in above.

The coating of the liquid of the compound that suppresses heat generation may be carried out by a spray-jetting, a jetting using a slot die, and/or a dip coating. The drying may be carried out at about 60 °C to about 140 °, or about 80 °C to about 120 °C.

A method for preparing the heat suppression layer may include coating the binder liquid on the battery case to prepare a binder layer, coating a liquid of the compound that suppresses heat generation on the binder layer and drying. The binder liquid may be prepared by adding a binder to a first solvent, and the liquid of the compound that suppresses heat generation may be prepared by adding the compound that suppresses heat generation to a second solvent. The binder, the first solvent, and the second solvent may be the same to the aforementioned binder and solvent, and the first solvent and the second solvent may be identical to or different from each other. The coating and the drying may be performed by the same procedures as described in above.

In an embodiment, the heat suppression layer may be prepared by adhering a double-sided tape to a coating target and then adhering the compound that suppresses heat generation thereon. The double-sided tape may be any suitable tape, as long as it has adhesive properties.

In some embodiments, the battery case may be any suitable case generally used in a battery, such as a metal can, a metal laminate sheet, a metal pouch, and/or the like, and in embodiments it may be a metal can. The metal may include aluminium, and/or a nickel alloy, but is not limited thereto. The nickel alloy may include an alloy of nickel and M (where M is Cu, Fe, Cr, Ti, Mo, Nb, Al, Mn, Si, W, Co, C (non-metal), or a combination thereof). For example, it may include Ni-Cu, Ni-Fe, Ni-Cr, Ni-Ti, Ni-Mo, Ni-Nb, Ni-Al, Ni-Mn, Ni-Si, Ni-W, Ni-Co, Ni-C, Ni-Cr-Fe, Ni-Cr-Mo, Ni-Cr-Co, and/or Ni-Cr-Fe-Mo.

### Electrode assembly

An electrode assembly according to one or more embodiments may include a positive electrode, a separator, and a negative electrode.

### Positive electrode

The positive electrode may include a current collector and a positive active material layer on the current collector. The positive active material layer includes a positive active material and may further include a binder and/or a conductive material (e.g., an electrically conductive material).

An amount of the positive active material may be about 90 wt% to about 99.5 wt% based on 100 wt% of the positive active material layer, and each amount of the binder and the conductive material may be about 0.5 wt% to about 5 wt% based on 100 wt% of the positive active material layer.

For example, the positive electrode may further include an additive that can serve as a sacrificial positive electrode.

The positive active material may include lithiated intercalation compounds that reversibly intercalate and deintercalate lithium ions. In some embodiments, at least one of a composite oxide of lithium and a metal selected from cobalt, manganese, nickel, and combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

As an example, compounds represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤ 1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤ 0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive active material may be may be a high nickel-based positive active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may realize high capacity and may be applied to a high-capacity, high-density rechargeable lithium battery.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, and/or the like, but are not limited thereto.

The conductive material is included to provide electrode conductivity (e.g., electrical conductivity), and any suitable electrically conductive material may be used as a conductive material unless it causes a chemical change (e.g., an undesirable chemical change in the rechargeable lithium battery). Examples of the conductive material may include a carbon-based material such as natural graphite, artificial graphite, carbon black, acetylene black, Ketjen black, carbon fiber, carbon nanofiber, carbon nanotube, and/or the like; a metal-based material of a metal powder and/or a metal fiber including copper, nickel, aluminium, silver, and/or the like; a conductive polymer (e.g., an electrically conductive polymer) such as a polyphenylene derivative; or a mixture thereof.

The current collector may include Al, but is not limited thereto.

### Negative electrode

The negative electrode includes a current collector, and a negative active material layer on the current collector. The negative active material layer includes a negative active material and may further include a binder and/or a conductive material (e.g., an electrically conductive material).

For example, the negative active material layer may include the negative active material at about 90 wt% to about 99 wt% and the binder at about 1 wt% to about 10 wt%, or may include the negative active material at about 90 wt% to about 99 wt%, the binder at about 0.5 wt% to about 5 wt%, and the conductive material at about 0.5 wt% to about 5 wt% (e.g., based on 100 wt% of the negative active material layer).

The negative active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative active material, such as, for example. crystalline carbon, amorphous carbon or a combination thereof. The crystalline carbon may be graphite such as unspecified-shaped, sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material and/or a Sn-based negative active material. The Si-based negative active material may include silicon, a silicon-carbon composite, SiOₓ (0 < x < 2), and/or a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) where primary silicon particles are agglomerated, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon particle may be nano silicon particles. In one or more embodiments, a particle diameter of the nano silicon particle may be about 10 nm to about 1,000 nm, about 20 nm to about 900 nm, about 20 nm to about 800 nm, about 20 nm to about 500 nm, about 20 nm to about 300 nm, or about 20 nm to about 150 nm. If the average particle diameter of the nano silicon particles is within the above ranges, the extreme volume expansion caused during charge and discharge may be suppressed or reduced, and a breakage of the conductive path due to crushing of particle may be prevented or reduced.

The silicon-carbon composite may further include crystalline carbon. For example, the silicon-carbon composite may include a core including crystalline carbon and silicon particles and an amorphous carbon coating layer on a surface of the core.

If the silicon-carbon composite includes the silicon particles, crystalline carbon, and amorphous carbon, an amount of the amorphous carbon may be about 30 wt% to about 70 wt% based on the total 100 wt% of the silicon-carbon composite, and an amount of the crystalline carbon may be about 1 wt% to about 20 wt% based on the total 100 wt% of the silicon-carbon composite. An amount of the silicon particles may be, based on the total 100 wt% of the silicon-carbon composite, about 20 wt% to about 69 wt%, and according to one or more embodiments, may be about 30 wt% to about 60 wt%.

The Si-based negative active material and/or the Sn-based negative active material may be used together with a carbon-based negative active material.

In some embodiments, the silicon-carbon composite may be included as a first negative active material and crystalline carbon may be included as a second negative active material. A mixing ratio of the first negative active material and the second negative active material may be about 1:99 to about 99:1 by weight ratio. In some embodiments, the negative active material may include the first negative active material and the second negative active material at a weight ratio of about 1:99 to about 50:50, or a weight ratio of about 5:95 to about 20:80.

The particle diameter of the Si-C composite may be suitably or appropriately controlled, and there is no need to limit it.

The binder improves binding properties of negative active material particles with one another and with a current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acryl rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, or a combination thereof.

As the negative electrode binder, a cellulose-based compound may be used. In some embodiments, as the negative electrode binder, the aqueous binder may be used together with the cellulose-based compound. The cellulose-based compound may include one or more of carboxymethyl cellulose, hydroxypropylmethyl cellulose, methyl cellulose, and/or alkali metal salts thereof. The alkali metal may be Na, K, and/or Li. The cellulose-based compound may impart or increase viscosity and be referred to as a thickener and may serve as a binder and may be referred to as a binder. An amount of the cellulose-based compound may be suitably or appropriately adjusted, and there is no need to limit it.

The dry binder may be a polymer material that is capable of being fibrous (e.g., capable of being fiberized or fibrillized). For example, the dry binder may be polytetrafluoroethylene, polyvinylidene fluoride, a polyvinylidene fluoride-hexafluoropropylene copolymer, polyethylene oxide, or a combination thereof.

The conductive material is included to provide electrode conductivity (e.g., electrical conductivity), and any suitable electrically conductive material may be used as a conductive material unless it causes a chemical change (e.g., an undesirable chemical change in the rechargeable lithium battery). Examples of the conductive material may be a carbon-based material such as natural graphite, artificial graphite, carbon black, acetylene black, ketjen black, a carbon fiber, a carbon nanofiber, carbon nanotube, and/or the like; a metal-based material of a metal powder and/or a metal fiber including copper, nickel, aluminium, silver, and the like; a conductive polymer (e.g., an electrically conductive polymer) such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal (e.g., an electrically conductive metal), and a combination thereof, but is not limited thereto.

### Electrolyte

The electrolyte may include a non-aqueous organic solvent and a lithium salt.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The non-aqueous organic solvents may be used alone or in a combination of two or more.

If using a carbonate-based solvent, a cyclic carbonate and a chain carbonate may be mixed together and used, and the cyclic carbonate and the chain carbonate may be mixed together in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), wherein x and y are integers of about 1 to about 20, lithium trifluoromethane sulfonate, lithium tetrafluoroethersulfonate, lithium difluorobis(oxalato)phosphate (LiDFBOP), and lithium bis(oxalato) borate (LiBOB).

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, or a combination thereof, but is not limited thereto.

The organic material and the inorganic material may be mixed together in one coating layer, or a coating layer including an organic material and a coating layer including an inorganic material may be stacked.

### Insulation tape

A rechargeable lithium battery according to some embodiments may further include an insulation tape (e.g., an electrical insulation tape). In some embodiments, the insulation tape may at least partially surround the electrode assembly in which the positive electrode, the separator, and the negative electrode are stacked to be included in the rechargeable lithium battery, or it may completely surround the electrode assembly to be included in the rechargeable lithium battery.

In one or more embodiments, the heat suppression layer may be present between the insulation tape and the battery case or between the insulation tape and the electrode assembly, and this may enable to further improve the battery safety.

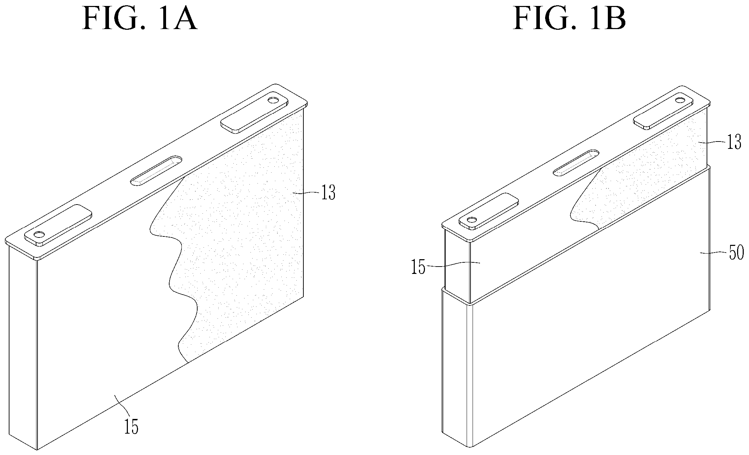

For example, as shown in FIG. 1A and FIG. 1B, the insulation tape 15 may entirely surround the assembly, and the heat suppression layer 13 according to some embodiments may be on the insulation tape 15 (FIG. 1A) to insert the assembly into the battery case (50) (FIG. 1B), the heat suppression layer 13 may be between the insulation tape 15 and the battery case 50. In FIGS. 1A-1B, the heat suppression layer 13 is shown to be in a portion of the insulation tape 15, but this only shows a part of the heat suppression layer to explain the positions of the heat suppression layer and the insulation tape, and this is not limited to being on only a part of the insulation tape. FIG. 1B shows the heat suppression layer 13 between the insulation tape 15 and the battery case 50, but the present disclosure is not limited thereto.

The insulation tape may be prepared from a polymer having insulating properties (e.g., electrically insulating properties) which is capable of preventing (or reducing an occurrence or likelihood of) a short circuit of the battery and the type (or kind) of the polymer need not be limited, but may be, for example, polyethyleneterephthalate, polyimide, or a combination thereof.

### Finishing tape

A rechargeable lithium battery according to some embodiments may further include a finishing tape partially surround the electrode assembly. The finishing tape serves to fix the electrode assembly to prevent or reduce loosening of the electrode assembly during the inserting the electrode assembly into the battery case.

The finishing tape may be polypyrrolidone, polyethylene terephthalate, polystyrene, oriented polystyrene (OPS), or a combination thereof.

In one or more embodiments, the heat suppression layer may be coated on the finishing tape, and for example, the heat suppression layer may be between the finishing tape and the battery case. In embodiments, if the rechargeable lithium battery includes both the insulation tape and the finishing tape, the finishing tape may contact the battery case, the heat suppression layer may be between the insulation tape and the finishing tape, and/or it may be between the finishing tape and the battery case, and/or the heat suppression layer may be between the electrode assembly and the finishing tape.

The rechargeable lithium battery may be classified into a lithium ion battery, a lithium ion polymer battery, or a lithium polymer battery depending on the types (or kinds) of the separator and the electrolyte, may be classified into cylindrical, prismatic, coin-type, or pouch-type depending on the shape, and may be classified into a bulk type or a thin film type depending on a size. The structure and fabrication of such batteries should be readily recognizable to those of ordinary skill in the art upon reviewing this disclosure, and thus, do not need to be described in further detail.

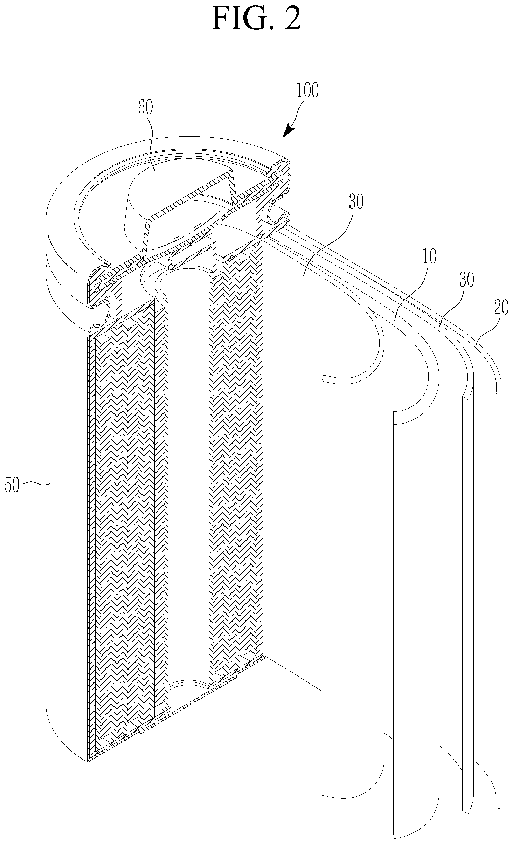

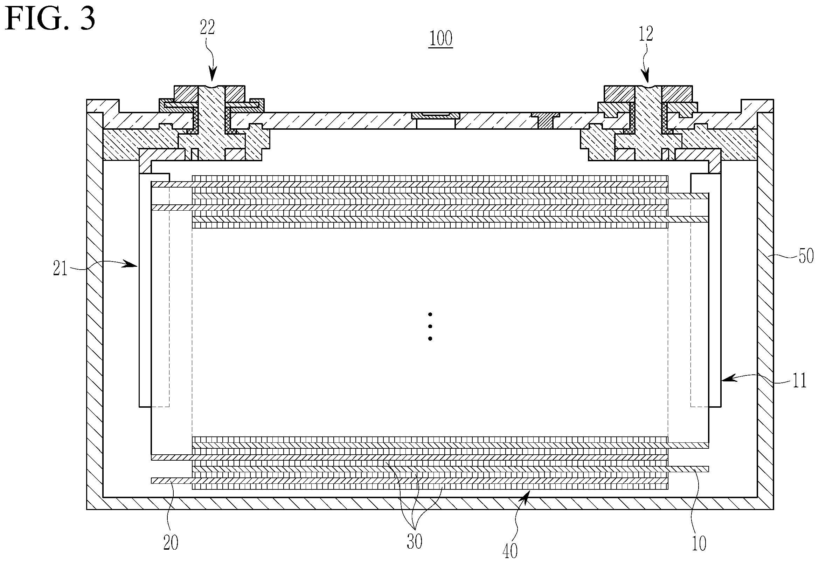

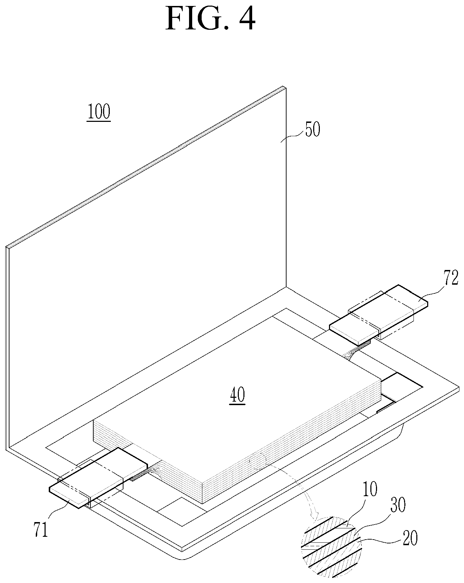

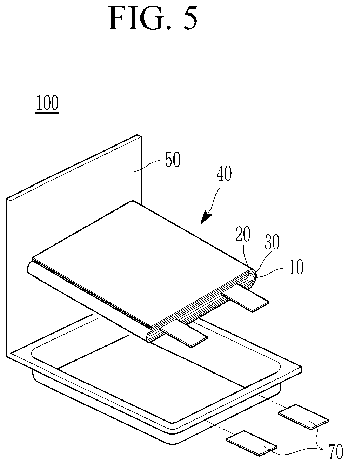

The rechargeable lithium battery may be classified into cylindrical, prismatic, pouch, or coin-type batteries, and the like depending on their shape. FIGS. 2 to 5 are schematic views illustrating a rechargeable lithium battery according to an embodiment. FIG. 2 shows a cylindrical battery, FIG. 3 shows a prismatic battery, and FIG. 4 and FIG. 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 that seals the case 50, as shown in FIG. 2. In FIG. 3, the rechargeable lithium battery 100 may include a positive lead tab 11, a positive terminal 12, a negative lead tab 21, and a negative terminal 22. As shown in FIG. 4 and FIG. 5, the rechargeable lithium battery 100 may include an electrode tab 70 (FIG. 5), which may be, for example, a positive electrode tab 71 and a negative electrode tab 72 (FIG. 4) that serve as an electrical path for inducing the current formed in the electrode assembly 40 to the outside.

Hereinafter, examples of the present disclosure and comparative examples are described. These examples, however, are not in any sense to be interpreted as limiting the scope of the present disclosure.

### Example 1

98.35 wt% of a LiNi_{0.88}Co_{0.105}Al_{0.15}O₂ positive active material, 0.8 wt% of a polyvinylidene fluoride binder, and 0.85 wt% of a Ketjen black conductive material were mixed together in an N-methyl pyrrolidone solvent to prepare a positive active material layer slurry.

The positive active material layer slurry was coated on an Al foil current collector, dried, and pressurized to prepare a positive electrode.

98 wt% of an artificial graphite negative active material, 1 wt% of a styrene-butadiene rubber, and 1 wt% of carboxymethyl cellulose were mixed together in a water solvent to prepare a negative active material layer slurry.

The negative active material layer slurry was coated on a Cu current collector, dried, and pressurized to prepare a negative electrode under a general technique.

A polyethylene/polypropylene two-layer separator was prepared.

An electrode assembly of the negative electrode, the separator, and the positive electrode was prepared.

95 wt% of FeF₃ and 5 wt% of a polyvinylidene fluoride binder were mixed together in an N-methyl pyrrolidone solvent to prepare a heat suppression layer composition.

The heat suppression layer composition was coated on the electrode assembly and dried to prepare a heat suppression layer having a thickness of 100 µm.

The electrode assembly together with the heat suppression layer was inserted into an aluminium metal can battery case for a prismatic cell (thickness: 600 µm) and an electrolyte was injected to fabricate a 151 Ah prismatic cell.

The electrolyte used was made by dissolving 1.5 M LiPF₆ in a mixed solvent of ethylene carbonate, ethylmethyl carbonate, and dimethyl carbonate (20:10:70 by volume ratio).

### Example 2

A 151 Ah prismatic cell was fabricated by the same procedure as in Example 1, except that FeF₂ was used as the compound that suppresses heat generation.

### Example 3

A 151 Ah prismatic cell was fabricated by the same procedure as in Example 1, except that CuF₂ was used as the compound that suppresses heat generation.

### Example 4

A 151 Ah prismatic cell was fabricated by the same procedure as in Example 1, except that MoCl₅ was used as the compound that suppresses heat generation.

### Example 5

A 151 Ah prismatic cell was fabricated by the same procedure as in Example 1, except that NiF₂ was used as the compound that suppresses heat generation.

### Example 6

A 151 Ah prismatic cell was fabricated by the same procedure as in Example 1, except that FeCl₃ was used as the compound that suppresses heat generation.

### Example 7

A 151 Ah prismatic cell was fabricated by the same procedure as in Example 1, except that CoFs was used as the compound that suppresses heat generation.

### Example 8

A 151 Ah prismatic cell was fabricated by the same procedure as in Example 1, except that CoF₂ was used as the compound that suppresses heat generation.

### Example 9

A 151 Ah prismatic cell was fabricated by the same procedure as in Example 1, except that MnFs was used as the compound that suppresses heat generation.

### Example 10

A 151 Ah prismatic cell was fabricated by the same procedure as in Example 1, except that NbFs was used as the compound that suppresses heat generation.

### Example 11

A 151 Ah prismatic cell was fabricated by the same procedure as in Example 1, except that TiF₄ was used as the compound that suppresses heat generation.

### Example 12

A 151 Ah prismatic cell was fabricated by the same procedure as in Example 1, except that ZnF₂ was used as the compound that suppresses heat generation.

### Example 13

A 151 Ah prismatic cell was fabricated by the same procedure as in Example 1, except that BiFs was used as the compound that suppresses heat generation.

### Example 14

A 151 Ah prismatic cell was fabricated by the same procedure as in Example 1, except that SeO₂ was used as the compound that suppresses heat generation.

### Example 15

A 151 Ah prismatic cell was fabricated by the same procedure as in Example 1, except that CuO was used as the compound that suppresses heat generation.

### Example 16

A 151 Ah prismatic cell was fabricated by the same procedure as in Example 1, except that CuO₂ was used as the compound that suppresses heat generation.

### Example 17

A 151 Ah prismatic cell was fabricated by the same procedure as in Example 1, except that P₂S₅ was used as the compound that suppresses heat generation.

### Example 18

A 151 Ah prismatic cell was fabricated by the same procedure as in Example 1, except that P₄S₇ was used as the compound that suppresses heat generation.

### Example 19

A 151 Ah prismatic cell was fabricated by the same procedure as in Example 1, except that NiS₂ was used as the compound that suppresses heat generation.

### Example 20

A 151 Ah prismatic cell was fabricated by the same procedure as in Example 1, except that CoS₂ was used as the compound that suppresses heat generation.

### Example 21

A 151 Ah prismatic cell was fabricated by the same procedure as in Example 1, except that FeS₂ was used as the compound that suppresses heat generation.

### Example 22

A 151 Ah prismatic cell was fabricated by the same procedure as in Example 1, except that SiS₂ was used as the compound that suppresses heat generation.

### Example 23

A 151 Ah prismatic cell was fabricated by the same procedure as in Example 1, except that V₂O₅ was used as the compound that suppresses heat generation.

### Example 24

A 151 Ah prismatic cell was fabricated by the same procedure as in Example 1, except that S₈ was used as the compound that suppresses heat generation.

### Example 25

95 wt% of TiO₂ and 5 wt% of a polyvinylidene fluoride binder were mixed together in an N-methyl pyrrolidone solvent to prepare a heat suppression layer composition.

The heat suppression layer composition was coated on the electrode assembly and dried to prepare a heat suppression layer having a thickness of 150 µm.

The electrode assembly together with the heat suppression layer was inserted into an aluminium metal can battery case for a prismatic cell (thickness: 600 µm) and an electrolyte was injected to fabricate a 151 Ah prismatic cell.

### Example 26

A 151 Ah prismatic cell was fabricated by the same procedure as in Example 25, except that Co₃O₄ was used as the compound that suppresses heat generation.

### Example 27

A 151 Ah prismatic cell was fabricated by the same procedure as in Example 25, except that MoO₃ was used as the compound that suppresses heat generation.

### Example 28

A 151 Ah prismatic cell was fabricated by the same procedure as in Example 25, except that MnO₂ was used as the compound that suppresses heat generation.

### Example 29

A 151 Ah prismatic cell was fabricated by the same procedure as in Example 25, except that Fe₂O₃ was used as the compound that suppresses heat generation.

### Example 30

47.5 wt% of TiO₂, 47.5 wt% of FeF₃, and 5 wt% of a polyvinylidene fluoride binder were mixed together in an N-methyl pyrrolidone solvent to prepare a heat suppression layer composition.

The heat suppression layer composition was coated on the electrode assembly and dried to prepare a heat suppression layer having a thickness of 200 µm.

The electrode assembly together with the heat suppression layer was inserted into an aluminium metal can battery case for a prismatic cell (thickness: 600 µm) and an electrolyte was injected to fabricate a 151 Ah prismatic cell.

The electrolyte used was made by dissolving 1.15 M LiPF₆ in a mixed solvent of ethylene carbonate, ethylmethyl carbonate, and dimethyl carbonate (20:20:40 by volume ratio).

### Example 31

A 151 Ah prismatic cell was fabricated by the same procedure as in Example 30, except that 47.5 wt% of TiO₂ and 47.5 wt% of FeF₂ were used.

### Example 32

A 151 Ah prismatic cell was fabricated by the same procedure as in Example 30, except that 47.5 wt% of Co₃O₄ and 47.5 wt% of FeF₃ were used.

### Example 33

A 151 Ah prismatic cell was fabricated by the same procedure as in Example 30, except that 47.5 wt% of Co₃O₄ and 47.5 wt% of FeF₂ were used.

### Example 34

A 151 Ah prismatic cell was fabricated by the same procedure as in Example 30, except that 47.5 wt% of MoOs and 47.5 wt% of FeF₃ were used.

### Example 35

A 151 Ah prismatic cell was fabricated by the same procedure as in Example 30, except that 47.5 wt% of MoOs and 47.5 wt% of FeF₂ were used.

### Example 36

A 151 Ah prismatic cell was fabricated by the same procedure as in Example 30, except that 47.5 wt% of MnO₂ and 47.5 wt% of FeF₃ were used.

### Example 37

A 151 Ah prismatic cell was fabricated by the same procedure as in Example 30, except that 47.5 wt% of MnO₂ and 47.5 wt% of FeF₂ were used.

### Example 38

A 151 Ah prismatic cell was fabricated by the same procedure as in Example 30, except that 47.5 wt% of Fe₂O₃ and 47.5 wt% of FeF₃ were used.

### Example 39

A 151 Ah prismatic cell was fabricated by the same procedure as in Example 30, except that 47.5 wt% of Fe₂O₃ and 47.5 wt% of FeF₂ were used.

### Comparative Example 1

A 151 Ah prismatic cell was fabricated by the same procedure as in Example 1, except that the heat suppression layer was not formed.

### Comparative Example 2

A 151 Ah prismatic cell was fabricated by the same procedure as in Example 1, except that TiO₂ was used as the compound that suppresses heat generation.

### Comparative Example 3

A 151 Ah prismatic cell was fabricated by the same procedure as in Example 1, except that Co₃O₄ was used as the compound that suppresses heat generation.

### Comparative Example 4

A 151 Ah prismatic cell was fabricated by the same procedure as in Example 1, except that MoOs was used as the compound that suppresses heat generation.

### Comparative Example 5

A 151 Ah prismatic cell was fabricated by the same procedure as in Example 1, except that MnO₂ was used as the compound that suppresses heat generation.

### Comparative Example 6

A 151 Ah prismatic cell was fabricated by the same procedure as in Example 1, except that Fe₂O₃ was used as the compound that suppresses heat generation.

### Experimental Example 1) Penetration test

The 151 Ah prismatic cells according to Example 1 to Example 39 and Comparative Examples 1 to 6 were charged with a current of 0.33 C and cut-off at a voltage of 4.25 V, and then, at a condition of a constant voltage of 4.25 V constant voltage, the cell was charged until the current was dropped to 1/20 C under a SOC 100 (charged to be 100% of charge capacity based total charge capacity of cell, if the cell was charged).

The fully charged cell was completely penetrated through the center of the cell using a pin having a diameter of 5 mm at a speed of 150 mm/sec. A maximum temperature occurred during penetration was measured. The results are shown in Table 1.

**Table 1**

| | During penetration, maximum exothermic temperature (°C) |
|---|---|
| Comparative Example 1 | 1654 |
| Comparative Example 2 | 1008 |
| Comparative Example 3 | 1032 |
| Comparative Example 4 | 1027 |
| Comparative Example 5 | 1016 |
| Comparative Example 6 | 1029 |
| Example 1 | 563 |
| Example 2 | 581 |
| Example 3 | 689 |
| Example 4 | 682 |
| Example 5 | 623 |
| Example 6 | 703 |
| Example 7 | 591 |
| Example 8 | 599 |
| Example 9 | 635 |
| Example 10 | 706 |
| Example 11 | 718 |
| Example 12 | 713 |
| Example 13 | 705 |
| Example 14 | 721 |
| Example 15 | 601 |
| Example 16 | 607 |
| Example 17 | 719 |
| Example 18 | 709 |
| Example 19 | 698 |
| Example 20 | 704 |
| Example 21 | 651 |
| Example 22 | 709 |
| Example 23 | 594 |
| Example 24 | 603 |
| Example 25 | 632 |
| Example 26 | 716 |
| Example 27 | 732 |
| Example 28 | 729 |
| Example 29 | 783 |
| Example 30 | 329 |
| Example 31 | 331 |
| Example 32 | 425 |
| Example 33 | 455 |
| Example 34 | 481 |
| Example 35 | 497 |
| Example 36 | 405 |
| Example 37 | 435 |
| Example 38 | 486 |
| Example 39 | 475 |

As shown in Table 1, the maximum exothermic temperature of Examples 1 to 39 was 783 °C or less which was significantly lower than the 1654 °C of Comparative Example 1 without the heat suppression layer, indicating excellent stability. In Comparative Examples 2 to 6, the maximum exothermic temperature was 1008 °C to 1032 °C, which was slightly lower than Comparative Example 1, but significantly higher than the Examples, indicating poor stability.

While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within the scope of the appended claims, and equivalents thereof.

## Claims

1. A rechargeable lithium battery, comprising:
an electrode assembly;
a battery case housing the electrode assembly; and
a heat suppression layer between the electrode assembly and the battery case,
wherein the heat suppression layer comprises a compound that suppresses heat generation, the compound being selected from FeF₃, FeF₂, CuF₂, MoCl₅, NiF₂, FeCl₃, CoF₃, CoF₂, MnFs, NbFs, TiF₄, ZnF₂, BiFs, SeO₂, CuO, CuO₂, P₂S₅, P₄S₇, NiS₂, CoS₂, FeS₂, SiS₂, V₂O₅, Sa, or a combination thereof.

2. The rechargeable lithium battery as claimed in claim 1, wherein the compound that suppresses heat generation comprises FeF₃.

3. The rechargeable lithium battery as claimed in claim 1 or claim 2,
wherein an amount of the compound that suppresses heat generation is about 1 wt% to about 99 wt% based on 100 wt% of the heat suppression layer.

4. The rechargeable lithium battery as claimed in any one of claims 1 to 3, wherein a thickness of the heat suppression layer is about 2 µm to about 600 µm.

5. The rechargeable lithium battery as claimed in any one of claims 1 to 4, wherein the rechargeable lithium battery is a can battery.

6. The rechargeable lithium battery as claimed in any one of claims 1 to 5, wherein the rechargeable lithium battery comprises an insulation tape between the electrode assembly and the battery case, and the heat suppression layer is coated on the insulation tape to be between the insulation tape and the battery case, or between the electrode assembly and the insulation tape.

7. The rechargeable lithium battery as claimed in any one of claims 1 to 5, wherein the rechargeable lithium battery further comprises an insulation tape surrounding the electrode assembly, and the heat suppression layer is between the insulation tape and the battery case, or is between the electrode assembly and the insulation tape.

8. The rechargeable lithium battery as claimed in any one of claims 1 to 7, wherein:
(i) the rechargeable lithium battery further comprises a finishing tape surrounding the electrode assembly, and the heat suppression layer is between the finishing tape and the battery case; or
(ii) the rechargeable lithium battery further comprises a finishing tape surrounding the electrode assembly, and the heat suppression layer is between the electrode assembly and the finishing tape.

9. A rechargeable lithium battery, comprising:
an electrode assembly;
a battery case housing the electrode assembly; and
a heat suppression layer between the electrode assembly and the battery case,
wherein the heat suppression layer comprises a compound that suppresses heat generation, the compound being selected from TiO₂, Co₃O₄, MoO₃, MnO₂, Fe₂O₃, or a combination thereof, and,
a thickness of the heat suppression layer is about 25% to about 100% based on a thickness of the battery case.

10. The rechargeable lithium battery as claimed in claim 9, wherein the thickness of the heat suppression layer is about 150 µm to about 600 µm.

11. The rechargeable lithium battery as claimed in claim 9 or claim 10, wherein:
(i) an amount of the compound that suppresses heat generation is about 1 wt% to about 99 wt% based on 100 wt% of the heat suppression layer; and/or
(ii) the compound that suppresses heat generation comprises TiO₂.

12. A rechargeable lithium battery, comprising:
an electrode assembly;
a battery case housing the electrode assembly; and
a heat suppression layer between the electrode assembly and the battery case,
wherein the heat suppression layer comprises a first compound that suppresses heat generation, the first compound being selected from TiO₂, Fe₂O₃, MnO₂, Co₃O₄, MoOs, or a combination thereof, and a second compound that suppresses heat generation, the second compound being selected from FeF₃, FeF₂, CuF₂, MoCl₅, NiF₂, FeCl₃, CoF₃, CoF₂, MnF₃, NbF₃, TiF₄, ZnF₂, BiF₃, SeO₂, CuO, CuO₂, P₂S₅, P₄S₇, NiS₂, CoS₂, FeS₂, SiS₂, V₂O₅, Sa, or a combination thereof.

13. The rechargeable lithium battery as claimed in claim 12, wherein a mixing ratio of the first compound that suppresses heat generation and the second compound that suppresses heat generation is about 95:5 to about 5:95 by weight ratio.

14. The rechargeable lithium battery as claimed in claim 12 or claim 13, wherein:
(i) an amount of the first compound that suppresses heat generation is about 0.4 wt% to about 94.5 wt% based on 100 wt% of the heat suppression layer; and/or
(ii) an amount of the second compound that suppresses heat generation is about 0.4 wt% to about 94.5 wt% based on 100 wt% of the heat suppression layer.

15. The rechargeable lithium battery as claimed in any one of claims 12 to 14, wherein:
(i) the first compound that suppresses heat generation comprises TiO₂; and/or
(ii) a thickness of the heat suppression layer is about 2 µm to about 600 µm.
